# EUROPEAN PATENT APPLICATION

(11) **EP 0 790 040 A1**
(43) Date of publication of application: **20.08.1997**
(21) Application number: 97300961.6
(22) Date of filing: 14.02.1997
(51) Int. Cl.: A61C 15/04

(54) **Polyethylene dental floss**

(30) Priority: 15.02.1996 US 602160; 10.09.1996 US 711801
(71) Applicant: Ranir/DCP Corporation, Grand Rapids, Michigan 49512 (US)
(72) Inventor: Lewkowicz, Martin, Upper Montclair, New Jersey 07043 (US); Yost, Kevin G., Short Hills, New Jersey 07078 (US); Coopersmith, Bernard, Union, New Jersey 07083 (US)
(74) Representative: Roberts, Gwilym Vaughan

(57) **Abstract**

An improved dental floss is comprised of a plurality of low denier melt extruded polyethylene filaments having a tensile modulus of about 200 to about 2500 grams per denier and a coefficient of friction which is less than about 0.2. The low coefficient of friction and resistance to cutting of the fibers allows the floss to glide more easily between tight interproximal contact points, providing greater gentleness to the gum tissue, enamel, dentin and cementum than nylon. The individual filaments are preferably held together by a bonding material such as wax. The floss of the invention preferably incorporates at least one material selected from the group consisting of flavor, anti-caries, anti-tartar, and anti-plaque agents.

## Description

This invention relates generally to dental floss, and more specifically to dental floss which exhibits a low coefficient of friction, and high resistance to fraying.

It is now generally well recognized that brushing alone is not completely effective in removing plaque and food particles from the crevices and contact points between the teeth. To supplement brushing, various materials have been used to clean the interproximal spaces and surfaces of the teeth. Dental flosses have long been used effectively to clean the spaces between the teeth and under the gum margin. When used properly, dental floss has been found to be effective in inhibiting tooth decay and gum disease, and is recommended by dentists in the daily dental hygiene program.

The most common dental flosses are generally comprised of multifilament yarns coated with a white or colorless bonding agent. The individual filaments are usually substances such as nylon 6 or nylon 6,6. Examples of other materials which have been proposed for use in dental flosses include rayon, polyester, acetate polymers, and polypropylene. A problem with nylon and most other materials in commercially available flosses is that they generally have a relatively high coefficient of friction. This relatively high coefficient of friction makes it difficult to pull the floss between tightly contacting teeth, and as a consequence the user must apply substantial force to pull the floss between the contact points of the teeth. Often this force will be suddenly released as the floss passes between the contact points, causing the floss to snap against the gum surface. As a result, the floss can cut into the gums and cause considerable irritation and possible bleeding. Because of the foregoing difficulties, many people prefer not to floss regularly, or not at all, despite the important benefits of supplementing brushing with flossing.

In order to overcome the problems associated with the high coefficient of friction of conventional flosses, such as those made of nylon, other materials with low coefficients of friction such as polyolefins and polytetrafluoroethylene (PTFE) have been suggested as alternatives. For example, U.S. Patents Nos. 5,033,488 and 5,209,251 suggest the use of expanded polytetrafluoroethylene coated with microcrystalline wax as an alternative to conventional flosses. U.S. Patent No. 5,220,932 suggest the use of a dental floss comprising a monofilament ribbon of oriented, non-porous PTFE, and a coating of wax. While PTFE, because of its lower coefficient of friction, overcomes many of the problems associated with nylon and other commercially available dental flosses, it is considerably more expensive than nylon (currently about 10 to 15 times greater). Polyethylenes are typically much lower priced than PTFE, but they tend to experience creep, or permanent elongation under tension, and are not as soft as are PTFE or the more commonly used nylons. U.S. Patent No. 5,113,880 cites a dental floss of ultrahigh molecular weight polyethylene having an intrinsic viscosity, or melt flow, of at least 5 dl/g. This is an improvement over conventional polyethylenes, but the solvent process used to make this higher melt flow resin results in higher manufacturing and product costs and the resultant yarn is stiffer than is desired.

Accordingly, there remains a need for a lower cost alternative to all these materials in a dental floss that exhibits high strength, a low coefficient of friction, and desirable softness in the hand.

The invention is set out in the attached claims. Preferred features are set out in the dependent claims.

The two problems with dental floss most frequently cited by users are the difficulty of passing a floss between tightly contacting teeth and the tendency of the dental floss to fray. The invention, as described, addresses both of these shortcomings while avoiding the excessively high cost of PTFE. It also addresses the deficiencies of standard polyethylene.

A low coefficient of friction, as provided by a polyethylene dental floss, allows the floss to pass between contact points of adjacent teeth relatively easily and thus improve the ease and convenience of dental floss use. Because the fibers can more easily slide over one another and the tooth surface, they are also less likely to suffer damaging abrasion. Coupled with the improved cut resistance of high modulus polyethylene, the tendency of the fibers to fray is decreased and thus reduces the prevalence of a primary consumer complaint with conventional dental flosses. The present invention provides a dental floss of much lower cost than PTFE while having a relatively low coefficient of friction compared to nylon and other conventional dental flosses. As a result of the lower coefficient of friction, the floss of this invention has a significantly reduced tendency to cause cutting, bleeding, and irritation of the gums. Consequently, people using the dental floss of this invention will be less inclined to forego the benefits of flossing.

In accordance with the invention, a dental floss is provided which comprises a plurality of polyethylene filaments of low melt index and high cut resistance with a coefficient of friction significantly less than that of conventional nylon flosses.

The dental floss of the present invention comprises a plurality of polyethylene filaments which are held together by a bonding material such as wax. The polyethylene yarn for this invention, normally having been made by the process of melt extrusion, has a molecular weight less than about 500,000, has a tenacity, i.e., tensile strength within the range of about 5 to about 50 g/dn (grams per denier), and a tensile modulus within the range of about 200 g/dn to about 2500 g/dn. The material is of strands of about 10 to about 2000 dn. Each filament is about 1 to about 10 dpt (denier per filament).
Preferably it is exemplified by the material designated Certran® by and from Hoechst Celanese Corporation, typically having a melt flow index of less than about 2 deciliters flow per gram weight (dl/g), a tenacity of about 12 to 20 grams per denier, a tensile modulus of from about 500 to about 700 grams per denier, and a molecular weight of less than about 300,000. Each filament in this material may range from about 1 to about 5 denier.

One of the primary modes of failure of dental floss is cutting by sharp contact points between teeth, and this type of polyethylene yarn has cut resistance comparable to yarns made by more expensive processes. The cut resistance, as measured by the Sintech method using fabric woven from the polyethylene, is equivalent, on a yarn denier basis, to that of the solvent extruded ultra high molecular weight polyethylene yarn previously mentioned.

While other polyethylenes could conceivably be used to make dental floss, the polyethylene as described provides a superior product. The melt extrusion processing used to make this product allows the fiber to be drawn to a high degree while still allowing it to be supple and soft. The combination provides the cut resistance necessary to minimize fraying in a small denier filament, and allows the very small filament size to be supple. Typical polyethylene drawn sufficiently to provide the required tenacity and small fiber size are too stiff to make a dental floss comfortable in the hands of the user.

The polyethylene filaments preferably have a tenacity in excess of 6 grams per denier, and more preferably in excess of 10 grams per denier, each filament preferably of 1.25 denier. The floss of the invention preferably has a denier of from about 200 to about 2000 and more preferably from about 600 denier to about 1500 denier. The floss of the invention generally comprises from about 240 to about 1600 filaments, more preferably from about 480 to about 960 filaments. The floss can have a variety of different cross sectional shapes ranging from a substantially circular cross section to a substantially flat square cross section as might be achieved in processing. The floss filaments have a coefficient of friction of about 0.2 or less.

The polyethylene filaments are preferably held together with a bonding material such as wax. The wax or other non-wax bonding material provides a means of tacking the floss to itself when it is wound into a spool for packaging and to act as a carrier for additives such as flavors and/or medicaments. Suitable wax bonding materials are widely known in the industry and to those skilled in the art. They may include naturally occurring and synthetic waxes. Petroleum derived waxes such as paraffin and microcrystalline waxes can be used. A suitable wax would most likely have a melting point of greater than about 50°C and be plastic and pliable at room temperature. The wax should not be brittle at room temperature, a requirement that negates the use of some waxes. Waxes that melt at less than about 50°C can become molten during product storage and cause the wax on the floss strands to flow, resulting in problems in dispensing the floss from the rolls. If the melting point of the wax is around 40°C, the coating could end up being too soft and fluid-like at room and body temperatures. With these considerations in mind, suitable waxes can be selected from natural waxes made by insects, animals or plants, and from petroleum waxes, for example microcrystalline waxes and synthetic waxes.

It is obvious to one skilled in the art that the floss may be provided with an active component such as, for example, a dentifrice or pharmacological medicament. The medicament may be disbursed in the bonding material used to coat and hold the filaments together, applied as a substrate coating before the bonding material is applied to the filaments, or as an outer coating over the bonding material. One suitable method involves dispersing the active component in a solvent or carrier with the bonding material and applying it to the floss in a single coating step.

A dentifrice additive would preferably provide a fluoride or fluoride-containing compound or other active agent, an abrasive, a detergent, and a flavor. A preferred carrier for this purpose is a water soluble wax such as polyethyleneglycol having an average molecular weight of about 4000 to about 6000 grams per mole.

The filaments of the floss of the present invention can be held together exclusively by a bonding material such as wax, or can be held together by a combination of a bonding material and twisting of the individual filaments. The twist incorporated into the yarn should be enough to aid handling and keep the filaments together during use, but should not be so great that the floss becomes stiff and inflexible. The twist of the yarn can be from about 0 to 6 turns per inch, with a preferred twist of from about 0.5 to 2.5 turns per inch. Other techniques to give additional integrity to the floss can also be utilized, including false twist, air jet entanglement and the like.

For each of the above physical characteristics, the value may be in equivalent metric term of grex instead of denier, as is known by those in the trade.

Variations of the characteristics can be used to suit particular conditions, as will be apparent to those in the trade. Therefore, the invention is not intended to be limited except by the scope of the appended claims and the equivalents thereto.

## Claims

1. A dental floss comprising a plurality of filaments fabricated of polyethylene having a melt flow index of less than 3 dl/g and a molecular weight of less than 500,000, said filaments having been made by the method of melt extrusion and having a size of less than about 5 denier per filament comprising a yarn of from about 10 to about 2000 denier.

2. The dental floss of claim 1 wherein the polyethylene from which the said dental floss is fabricated has a molecular weight of less than 300,000.

3. The dental floss of claim 1 wherein the yarn is from 600 to 1600 denier.

4. The dental floss of claim 1 wherein the individual fibers have a size less than 2 denier per filament.

5. The dental floss of claim 1 wherein said filaments have a tenacity in excess of 6 grams per denier.

6. The dental floss of claim 1 having from about 100 to about 1000 filaments.

7. The dental floss of claim 1 wherein the filaments of said dental floss are held together by a bonding material.

8. The dental floss of claim 7 wherein said bonding material is a wax-like material composed of natural and synthetic waxes having a melting point of from about 60°C to about 85°C and is not brittle at normal temperatures of dental floss use, for example, one or more material from the group consisting of bees wax, paraffin, microcrystalline waxes, and polyethylene glycols.

9. The dental floss of claim 7 wherein said bonding material is a non-wax-like material and includes one or more material from the group consisting of polyethylene oxides, polyvinyl acetates, polyvinyl pyrrolidones, alcohol soluble terpolyamides, and hydroxy propyl celluloses.

10. The dental floss of claim 7 which incorporates in or on the dental floss at least one material selected from the group consisting of flavoring, dentifrice, anti-caries, anti-tartar, and anti-plaque agents.

11. The dental floss of claim 10 which incorporates in or on the dental floss liquid or spray dried flavorants.

12. The dental floss of claim 10 which incorporates in or on the dental floss one or more material from the group of medicaments including sodium fluoride, sodium monofluorophosphate, stannous fluoride, calcium fluoride, zinc chloride, antibacterials, such as chlorhexidine, a chlorhexidine salt, cetyl pyridinium chloride, benzethonium chloride.

13. A dental floss comprising a plurality of filaments of polyethylene having a tenacity of about 5 to about 50 g/dn, a tensile modulus of about 200 to about 2500 g/dn, having from 10 to 2000 dn, and each filament being about 1 to about 10 dpf.

14. The dental floss in claim 13 wherein said filaments are melt extruded filaments, for example, having a melt extruded filaments have a melt flow index of less than 2 dl/g and/or a molecular weight less than about 500,000, preferably less than about 300,000.

15. The dental floss in claim 13 wherein said coefficient of friction is about 0.2 or less.

16. The dental floss in claim 14 wherein the filaments of said dental floss are held together by a bonding material, preferably a wax-like material composed of natural and synthetic waxes having a melting point of from about 60°C to about 85°C which is not brittle at normal temperatures of dental floss use, for example, one or more material from the group consisting of bees wax, parraffin, microcrystalline waxes, and polyethylene glycols, or a non-wax-like material including one or more material from the group consisting of polyethylene oxides, polyvinyl acetates, polyvinyl pyrrolidones, alcohol soluble terpolyamides, and hydroxy propyl celluloses.

17. The dental floss of claim 16 which incorporates in or on the dental floss at least one material selected from the group consisting of flavoring, dentifrice, anti-caries, anti-tartar, and anti-plaque agents, and/or liquid or spray dried flavorants, and/or one or more material from the group of medicaments including sodium fluoride, sodium monofluorophosphate, stannous fluoride, calcium fluoride, zinc chloride, antibacterials, such as chlorhexidine, a chlorhexidine salt, cetyl pyridinium chloride, benzethonium chloride.
